# EUROPEAN PATENT APPLICATION

(11) **EP 3 520 969 A1**
(43) Date of publication of application: **07.08.2019**
(21) Application number: 18159090.2
(22) Date of filing: 28.02.2018
(51) Int. Cl.: B25J 9/00, B25J 15/02, B25J 15/12, B25J 19/02, B65H 67/06

(54) **CABLE CONVEYING APPARATUS**

(30) Priority: 05.02.2018 KR 20180014172
(71) Applicant: Nongshim Engineering Co., Ltd., Seoul 07057 (KR)
(72) Inventor: LIM, Chang Hwan, Seoul 06572 (KR); LEE, Chang Eun, Gyeongsangnam-do 51674 (KR); KIM, Sung Soo, Gyeongsangnam-do 50875 (KR); LEE, Seok Won, Gyeonggi-do 12016 (KR)
(74) Representative: Brevalex

(57) **Abstract**

A cable conveying apparatus is provided. The cable conveying apparatus includes: a first feed robot (200) configured to feed a box (B) containing a cable (C); a first transfer robot (400) configured to take the cable out of the box fed by the first feed robot and insert the cable into a pallet (P); and a scanner (910) placed in a path of one of the first feed robot, the first transfer robot, and the box, the scanner being configured to acquire information about the cable.

## Description

### CROSS-REFERENCE TO RELATED APPLICATION

This application claims the benefit of Korean Patent Application No. 10-2018-0014172, filed on February 5, 2018, in the Korean Intellectual Property Office, the disclosure of which is incorporated herein in its entirety by reference.

### BACKGROUND

### 1. Field

One or more embodiments relate to an apparatus, and more particularly, to a cable conveying apparatus.

### 2. Description of the Related Art

Cables may be used in various devices. Cables of various types may be used according to factors such as places or devices to which the cables are applied. To this end, various pieces of information may be recorded on cables.

Laborers may manually carry such cables after opening cable boxes. In this case, laborers may read information recorded on the cables to separate the cables or input the information. At this time, laborers may incorrectly input the information due to poor workmanship or by mistake. Because of such errors, cables may be transferred to unexpected places.

In this case, cables may not be installed in correct places or devices, and thus a fire may break out due to overheating or devices may not operate due to incorrect installation of cables.

### SUMMARY

One or more embodiments include a cable conveying apparatuses.

Additional aspects will be set forth in part in the description which follows and, in part, will be apparent from the description, or may be learned by practice of the presented embodiments.

According to one or more embodiments, a cable conveying apparatus may include: a first feed robot configured to feed a box containing cable; a first transfer robot configured to take the cable out of the box fed by the first feed robot and insert the cable into a pallet; and a scanner placed in a path of one of the first feed robot, the first transfer robot, and the box, the scanner being configured to acquire information about the cable.

The scanner may include a radio frequency identification (RFID) reader.

The first feed robot may be configured to separate a cover from the box by pulling the cover by suction.

The first transfer robot may include: a support unit fixed to the ground; a rotation unit rotatably provided on the support unit; and a gripper unit provided on the rotation unit and configured to grip the cable contained in the box and take the cable out of the box.

The gripper unit may include: a connection portion connected to the rotation unit; a first gripper portion connected to the connection portion in a linearly movable and rotatable manner; and a second gripper portion facing the first gripper portion and connected to the connection portion in a linearly movable and rotatable manner.

At least one of the first and second gripper portions may include: a drive portion rotatably connected to the connection portion; a guide portion fixed to the connection portion; and a gripping portion connected to the drive portion and inserted into the guide portion, the gripping portion being configured to linearly move and rotate along the guide portion according to an operation of the drive portion.

The gripping portion may include: a movable portion inserted into the guide portion and configured to linearly move and rotate along the guide portion; and a finger portion connected to the movable portion and configured to grip the cable.

The finger portion may include a cover portion configured to make contact with the cable.

The cover portion may include an elastic material.

The finger portion further may include a reinforcement support portion placed between portions of the cover portion.

The cable conveying apparatus may further include a first transfer unit placed between the first feed robot and the first transfer robot and configured to transfer the box containing the cable.

The cable conveying apparatus may further include a second transfer robot configured to transfer the pallet containing the cable to an outer area.

According to one or more embodiments, a cable conveying apparatus may include: a first transfer robot configured to feed cable contained in a container into a box; a cutting robot configured to cut a tie of the cable fed by the first transfer robot; and a scanner placed in a path of one of the first transfer robot, the cutting robot, and the box, the scanner being configured to acquire information about the cable which is recorded on the tie.

### BRIEF DESCRIPTION OF THE DRAWINGS

These and/or other aspects will become apparent and more readily appreciated from the following description of the embodiments, taken in conjunction with the accompanying drawings in which:
FIG. 1 is a plan view illustrating a cable conveying apparatus according to an embodiment;
FIG. 2 is a perspective view illustrating a gripper unit of a first transfer robot illustrated in FIG. 1;
FIG. 3 is a front view illustrating the gripper unit illustrated in FIG. 2;
FIG. 4 is a side view illustrating the gripper unit illustrated in FIG. 2;
FIG. 5 is a side view illustrating an operation state of the gripper unit illustrated in FIG. 2;
FIG. 6 is a block diagram illustrating control flows of the cable conveying apparatus illustrated in FIG. 1;
FIG. 7 is a plan view illustrating a cable conveying apparatus according to another embodiment; and
FIG. 8 is a schematic view illustrating a cutting robot illustrated in FIG. 7.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list. In the following description, technical terms are used only for explaining exemplary embodiments, and not for purposes of limitation. Terms in the singular form may include the plural form unless specifically mentioned. The meaning of "comprises" and/or "comprising" specifies an element, a step, a process, an operation, and/or a device but does not exclude other elements, steps, processes, operations, and/or devices. It will be understood that although the terms first and second are used herein to describe various elements, these elements should not be limited by these terms. Terms are only used to distinguish one element from other elements.

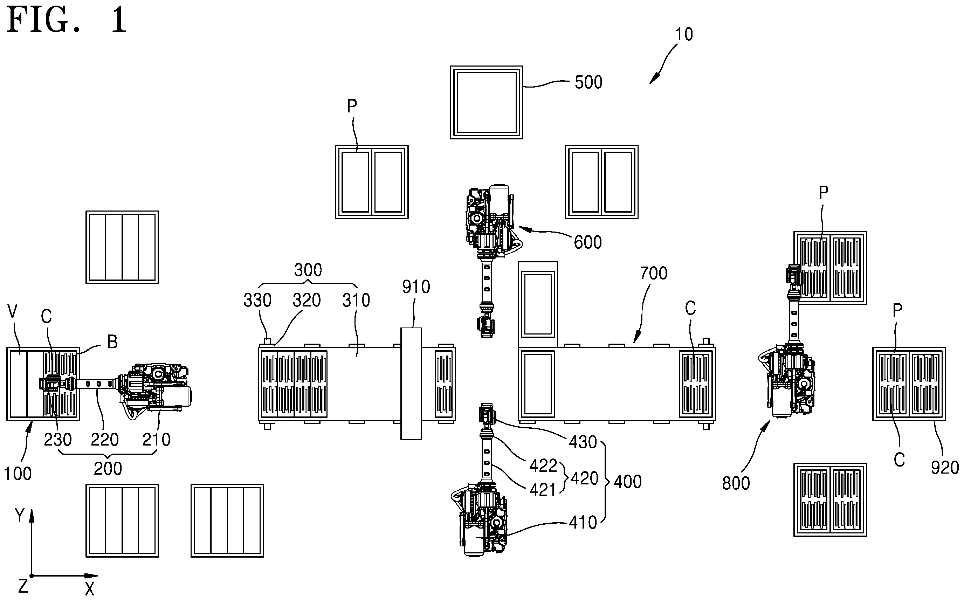

FIG. 1 is a plan view illustrating a cable conveying apparatus 10 according to an embodiment.

Referring to FIG. 1, the cable conveying apparatus 10 may include a first loading unit 100, a first feed robot 200, a first transfer unit 300, a first transfer robot 400, a second loading unit 500, a second feed robot 600, a second transfer unit 700, a second transfer robot 800, a scanner 910, and an unloading unit 920.

Each of boxes B containing cables C may be supplied from an outside area and may be loaded onto the first loading unit 100. Here, the first loading unit 100 may be provided in various types. In an embodiment, the first loading unit 100 may have a shelf shape capable of receiving at least one box B thereon. In another embodiment, the first loading unit 100 may be a conveyor belt or the like, and a plurality of boxes B may be placed on the first loading unit 100 to feed one of the boxes B according to the operation of the first feed robot 200 synchronized with the first loading unit 100. In another embodiment, the first loading unit 100 may be a movable cart. The first loading unit 100 is not limited to the above-mentions types. That is, the first loading unit 100 may have any type or structure capable of receiving boxes B containing cables C therein. However, for ease of description, the following description will be given based on the case in which the first loading unit 100 has a shelf shape.

The first feed robot 200 may move either boxes B or cables C loaded on the first loading unit 100 to the first transfer unit 300. For ease of description, the following description will be given based on the case in which the first feed robot 200 transfers boxes B containing cables C to the first transfer unit 300.

The first feed robot 200 may include a robot support unit 210, a robot arm 220, and a robot gripper 230. In this case, the robot support unit 210 may be fixed to the ground, a bottom or wall of a building, or the like. The robot arm 220 may include a plurality of frames and a joint unit connecting the frames neighboring each other in a relatively movable manner. In this case, the joint unit may rotate one of the frames connected to each other. The robot gripper 230 may perform at least one of a gripping function and a suction function on an object. In this case, the robot gripper 230 may be provided as tongs. The first feed robot 200 is not limited to the above-described configurations. That is, the first feed robot 200 may include any robot capable of moving an object through various motions. However, for ease of description, the following description will be given based on the case in which the first feed robot 200 includes the robot support unit 210, the robot arm 220, and the robot gripper 230. In this case, the robot support unit 210, the robot arm 220, and the robot gripper 230 may be respectively similar to a support unit 410, a rotation unit 420, and a gripper unit 430 of the first transfer robot 400 that is described below.

The first feed robot 200 may separate a cover V from a box B loaded on the first loading unit 100. For example, a side of the box B loaded on the first loading unit 100 may be opened, and the open side of the box B may be closed with the cover V. In this case, the first feed robot 200 may separate the cover V from the box B and may then transfer the box B to the first transfer unit 300 from the first loading unit 100. A suction hole may be formed in the robot gripper 230 to pull the cover V by suction. In another embodiment, a sucker may be provided on the robot gripper 230 instead of a suction hole.

The first transfer unit 300 may transfer the box B transferred thereto by the first feed robot 200. In this case, the first transfer unit 300 may be provided in various types. For example, in an embodiment, the first transfer unit 300 may include a first conveyor 310, first rollers 320 placed inside the first conveyor 310, and a first roller drive unit 330 connected to the first rollers 320. In this case, the first roller drive unit 330 may include a motor and a decelerator. In this configuration, if the first roller drive unit 330 operates, the first rollers 320 move the first conveyor 310 while rotating, and thus the box B placed on an upper surface of the first conveyor 310 may be moved. In another embodiment, the first transfer unit 300 may include first rollers (not shown) and a first roller drive unit (not shown). In this case, the first roller drive unit may be connected to the first rollers to transfer the box B by rotating the first rollers. In this case, the first roller drive unit may include a motor and gear units, and the gear units may be individually in contact with the first rollers to rotate the first rollers. In another embodiment, the first roller drive unit may include a motor, a gear, and a chain, and the chain may be connected to the first rollers to rotate the first rollers. In another embodiment, the first transfer unit 300 may include a rest plate (not shown) and a linear motor configured to linearly move the rest plate. The first transfer unit 300 is not limited to the above-described embodiments. That is, the first transfer unit 300 may include any device capable of receiving boxes B thereon and transferring the boxes B. However, for ease of description, the following description will be given based on the case in which the first transfer unit 300 includes the first conveyor 310, the first rollers 320, and the first roller drive unit 330.

The first transfer robot 400 may grip a cable C contained in the box B transferred by the first transfer unit 300 and may take the cable C out of the box B. To this end, the first transfer robot 400 may include the support unit 410, the rotation unit 420, and the gripper unit 430.

The support unit 410 may be fixed to the ground. The rotation unit 420 may be rotatably connected to the support unit 410. In this case, a motor and a decelerator may be additionally provided between the rotation unit 420 and the support unit 410. The rotation unit 420 may include a plurality of frames 421 and a joint unit 422 connecting the plurality of frames to each other in a rotatable manner. In this case, the joint unit 422 may include a motor and a decelerator and may move the plurality of frames 421 relative to each other. The joint unit 422 may be placed between the frames 421 connected to each other and may adjust the angle between the frames 421. In addition, the joint unit 422 may vary the position of one of the frames 421. For example, the joint unit 422 may vary the position of one of the frames 421 to vary the position of the gripper unit 430 located on an end of the frames 421. The joint unit 422 may connect the gripper unit 430 to the frames 421 in addition to connecting the frames 421 to each other.

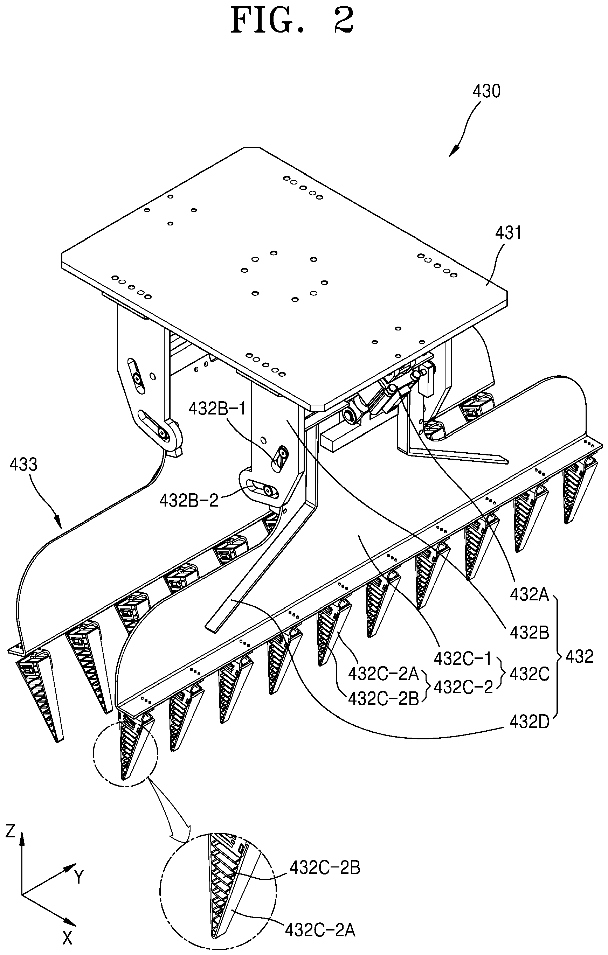

The gripper unit 430 may be connected to an end of the rotation unit 420 and may grip a cable C. The gripper unit 430 will be further described with reference to FIGS. 2 to 5.

Pallets P or storage boxes (not shown) may be placed on the second loading unit 500. In this case, the pallets P may have inner spaces to accommodate cables C. For ease of description, the following description will be given based on the case in which pallets P are placed on the second loading unit 500. At least one second loading unit 500 may be provided. If a plurality of second loading units 500 are provided, different pallets P may be respectively placed on the second loading units 500. The second loading unit 500 is identical or similar to the first loading unit 100, and thus a detailed description thereof will not be given.

The second feed robot 600 may grip a pallet P and may feed the pallet P from the second loading unit 500 to the second transfer unit 700. In this case, the second feed robot 600 may select one of a plurality of pallets P and grip the selected pallet P. In addition, the second feed robot 600 may be rotatably provided on the ground or a building, and an end of the second feed robot 600 may move from the second loading unit 500 to the second transfer unit 700 or from the second transfer unit 700 to the second loading unit 500. In this case, the second feed robot 600 may include a one-arm robot. For example, the second feed robot 600 may be identical or similar to the first feed robot 200.

The second transfer unit 700 may transfer the pallet P. In this case, the first transfer robot 400 may place cables C in the pallet P when the pallet P is transferred by the second transfer unit 700. The second transfer unit 700 is identical or similar to the first transfer unit 300, and thus a detailed description thereof will not be given.

The second transfer robot 800 may transfer the pallet P, accommodating cables C and transferred by the second transfer unit 700, to the unloading unit 920. In this case, the second transfer robot 800 may transfer the pallet P to the unloading unit 920 according to information scanned by the scanner 910. In this case, the second transfer robot 800 is identical or similar to the second feed robot 600, and thus a detailed description thereof will not be given.

In an embodiment, the scanner 910 may scan information attached to cables C, which are transferred on an upper surface of the first transfer unit 300. In another embodiment, the scanner 910 may be attached to the first transfer robot 400, and when the gripper unit 430 of the first transfer robot 400 grips a cable C or is placed on an upper side of a cable C, the scanner 910 may scan information attached to the cable C. In this case, the scanner 910 may scan information on the cable C in a non-contact manner. For example, in an embodiment, the scanner 910 may include a barcode reader. In another embodiment, the scanner 910 may include a radio frequency identification (RFID) reader. In another embodiment, the scanner 910 may include a quick response (QR) code reader. For ease of description, the following description will be given based on the case in which the scanner 910 includes an RFID reader and stays above the first transfer unit 300. In this case, cables C may have RFID tags attached thereto.

After a pallet P accommodating cables C is transferred to the second transfer robot 800, the pallet P may be placed onto the unloading unit 920. In this case, the unloading unit 920 may be provided in various types. In an embodiment, the unloading unit 920 may be identical or similar to the first loading unit 100. In another embodiment, the unloading unit 920 may be identical or similar to the first transfer unit 300. For ease of description, the following description will be given based on the case in which the unloading unit 920 is identical or similar to the first loading unit 100.

A plurality of unloading units 920 may be provided. In this case, the plurality of unloading units 920 may be spaced apart from each other, and cables C having the same information may be placed onto the same unloading unit 920. For example, cables C having different pieces of information may be placed onto different unloading units 920.

Hereinafter, the gripper unit 430 of the first transfer robot 400 will be described.

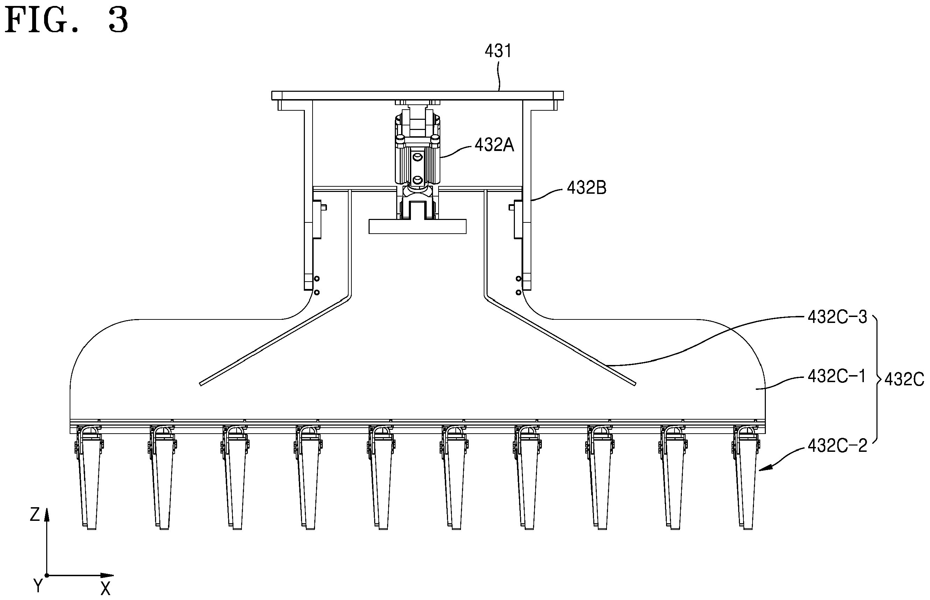

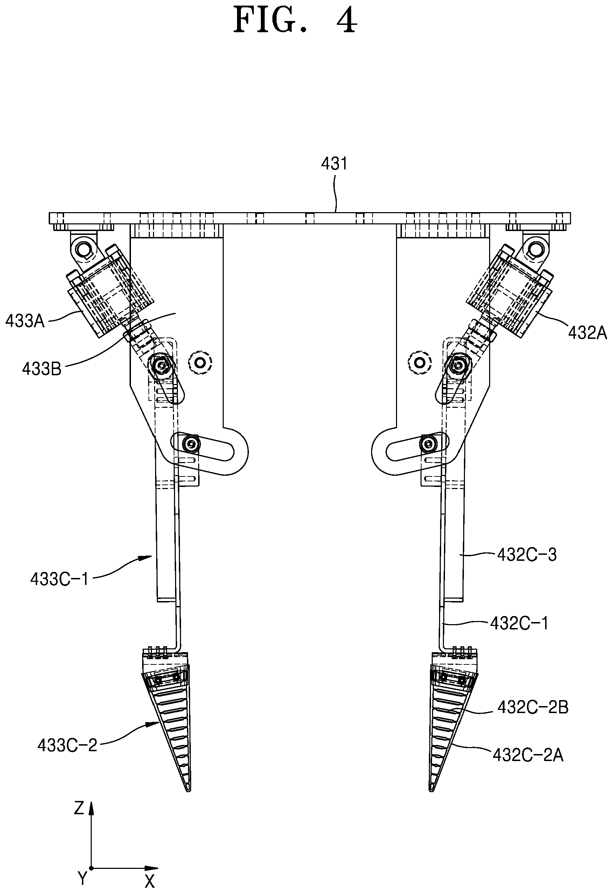

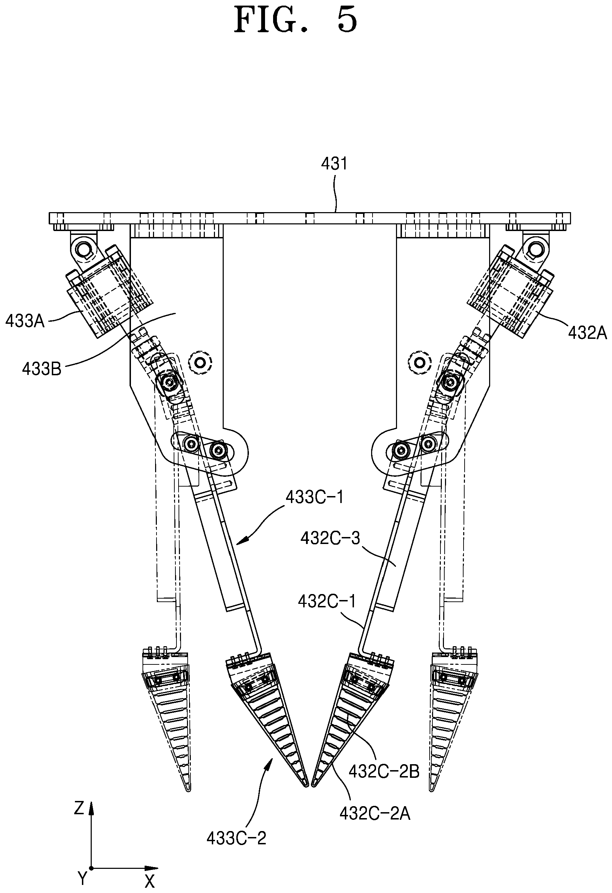

FIG. 2 is a perspective view illustrating the gripper unit 430 of the first transfer robot 400 illustrated in FIG. 1. FIG. 3 is a front view illustrating the gripper unit 430 illustrated in FIG. 2. FIG. 4 is a side view illustrating the gripper unit 430 illustrated in FIG. 2. FIG. 5 is a side view illustrating an operation state of the gripper unit 430 illustrated in FIG. 2.

Referring to FIGS. 2 to 5, the gripper unit 430 may include a connection portion 431, a first gripper portion, and a second gripper portion 433. The connection portion 431 may be provided by connecting a plurality of plates. In this case, the connection portion 431 may be movably connected to the rotation unit 420. For example, as described above, the connection portion 431 may be connected to the rotation unit 420 through an additional unit, that is, the joint unit 422. The first gripper portion 432 and the second gripper portion 433 may be connected to the connection portion 431 in a linearly movable and rotatable manner. In addition, the first and second gripper portions 432 and 433 may face each other. In this case, the gap between the first and second gripper portions 432 and 433 may be varied to grip a cable C (refer to FIG. 1). Since the first and second gripper portions 432 and 433 are identical or similar to each other, the first gripper portion 432 will now be mainly described for conciseness of description.

The first gripper portion 432 may include a first drive portion 432A, a first guide portion 432B, a first gripping portion 432C, and a first reinforcement portion 432D. The first drive portion 432A may be rotatably connected to the connection portion 431 and the first gripping portion 432C. In this case, the first drive portion 432A may include a cylinder.

The first guide portion 432B may be connected to a lower surface of the connection portion 431. For example, a pair of first guide portions 432B may be provided, which are perpendicular to the lower surface of the connection portion 431 and face each other with the first gripping portion 432C being therebetween. The first guide portion 432B may guide motions of the first gripping portion 432C. For example, the first guide portion 432B may include a first guide slot 432B-1 and a second guide slot 432B-2 in which portions of the first gripping portion 432C are inserted. In this case, the first guide slot 432B-1 and the second guide slot 432B-2 may have a long hole shape. In this case, the extension direction of the first guide slot 432B-1 may be different from the extension direction of the second guide slot 432B-2. For example, the angle between the direction of the first guide slot 432B-1 and the height direction of the first guide portion 432B may be less than the angle between the direction of the second guide slot 432B-2 and the height direction of the first guide portion 432B. In this case, the first and second guide slots 432B-1 and 432B-2 may not be perpendicular to or parallel to the height direction of the first guide portion 432B, but may be inclined from the height direction of the first guide portion 432B. Since the first and second guide slots 432B-1 and 432B-2 are formed in different directions, the first gripping portion 432C may make a rotational motion together with a slight linear motion along the first guide portion 432B.

The first gripping portion 432C may be rotatably connected to the first drive portion 432A and may be linearly moved and rotated along the first guide portion 432B according to the operation of the first drive portion 432A. In this case, the first gripping portion 432C may include a first movable portion 432C-1 and a first finger portion 432C-2.

The first movable portion 432C-1 may be rotatably connected to the first drive portion 432A. In addition, portions of the first movable portion 432C-1 may protrude, and the protruding portions of the first movable portion 432C-1 may be respectively inserted into the first and second guide slots 432B-1 and 432B-2. Additional parts such as nuts may be coupled to the protruding portions of the first movable portion 432C-1 to prevent separation of the protruding portions from the first and second guide slots 432B-1 and 432B-2.

The first finger portion 432C-2 may connected to the first movable portion 432C-1. In this case, a plurality of first finger portions 432C-2 may be provided which are spaced apart from each other. The first finger portions 432C-2 may have a triangular sectional shape.

Each of the first finger portions 432C-2 may include a first cover portion 432C-2A and a first reinforcement support portion 432C-2B. In this case, the first cover portion 432C-2A may include an elastic material. For example, the first cover portion 432C-2A may include a material such as silicone, rubber, or a synthetic resin. However, the first cover portion 432C-2A is not limited thereto. For example, the first cover portion 432C-2A may be provided by stacking a plurality of such elastic materials or applying an elastic material to a thin metal plate. The first cover portion 432C-2A may be of any type having elasticity to some degree. The first reinforcement support portion 432C-2B may be placed inside the first cover portion 432C-2A. In this case, the first cover portion 432C-2A may have an inner space, and the first reinforcement support portion 432C-2B may be placed in the inner space. A plurality of first reinforcement support portions 432C-2B may be provided. In this case, the plurality of first reinforcement support portions 432C-2B may be spaced apart from each other and may have different sizes. When the first cover portion 432C-2A grips a cable C, the first reinforcement support portion 432C-2B may prevent excessive deformation of the first cover portion 432C-2A. In this case, the first reinforcement support portion 432C-2B may have elasticity to some degree.

The first reinforcement portion 432D may be provided on the first gripping portion 432C to reinforce the first gripping portion 432C. For example, the first reinforcement portion 432D may be placed on a side of the first movable portion 432C-1. In this case, the first reinforcement portion 432D may be partially bent to reinforce the entirety of the first movable portion 432C-1.

When the gripper unit 430 operates, the first gripper portion 432 and the second gripper portion 433 may grip a cable C. For example, when the first drive portion 432A and a second drive portion 433A are operated, the first movable portion 432C-1 and a second movable portion 433C-1 may be moved. In this case, while the first drive portion 432A extends, the first movable portion 432C-1 may rotate on the first guide portion 432B, and thus the angle of the first movable portion 432C-1 may vary with respect to the first guide portion 432B. In addition, while the second drive portion 433A extends, the second movable portion 433C-1 may rotate on a second guide portion 433B, and thus the angle of the second movable portion 433C-1 may vary with respect to the second guide portion 433B. In this case, the first movable portion 432C-1 may rotate on the first guide portion 432B while descending along the first guide portion 432B. In addition, the second movable portion 433C-1 may also rotate on the second guide portion 433B while descending along the second guide portion 433B. For example, one of the protruding portions of the first movable portion 432C-1 may guide linear and rotational motions of the first movable portion 432C-1 while diagonally moving along the first guide slot 432B-1, and the other of the protruding portions of the first movable portion 432C-1 may guide linear and rotational motions of the first movable portion 432C-1 while moving along the second guide slot 432B-2. For example, the first guide slot 432B-1 may mainly guide descending of the first movable portion 432C-1, and the second guide slot 432B-2 may mainly guide rotation of the first movable portion 432C-1. In addition, the first and second guide slots 432B-1 and 432B-2 may guide a movement of the first movable portion 432C-1 toward the second movable portion 433C-1. The second movable portion 433C-1 may move similarly to the first movable portion 432C-1 while being guided by the second guide portion 433B.

When the first movable portion 432C-1 and the second movable portion 433C-1 are moved as described above, the first finger portions 432C-2 and second finger portions 433C-2 may be moved close to each other. In this case, since the first finger portions 432C-2 and the second finger portions 433C-2 face each other, the first finger portions 432C-2 and the second finger portions 433C-2 may grip a cable C. In another embodiment, the first finger portions 432C-2 and the second finger portions 433C-2 may be staggered such that the first finger portions 432C-2 may enter spaces between the second finger portions 433C-2 adjacent to each other, and the second finger portions 433C-2 may enter spaces between the first finger portions 432C-2 adjacent to each other. For ease of description, the following description will be given based on the case in which the first finger portions 432C-2 and the second finger portions 433C-2 face each other.

When the first finger portions 432C-2 and the second finger portions 433C-2 approach each other, a cable C may be gripped between the first finger portions 432C-2 and the second finger portions 433C-2. In this manner, the first transfer robot 400 may grip a cable C.

After the first transfer robot 400 grips a cable C as described above, the first transfer robot 400 may transfer the cable C and release the cable C. For example, the first drive portion 432A and the second drive portion 433A may decrease in length in a reverse manner to that described above. In this case, as the first movable portion 432C-1 and the second movable portion 433C-1 ascend respectively along the first guide portion 432B and the second guide portion 433B, the first movable portion 432C-1 and the second movable portion 433C-1 may rotate in directions opposite the above-mentioned directions. At this time, the first finger portions 432C-2 and the second finger portions 433C-2 may be moved away from each other, and thus a space between the first finger portion 432C-2 and the second finger portion 433C-2 may increase. The cable C may fall through the space from the first finger portion 432C-2 and the second finger portion 433C-2 or may leave the space between the first finger portion 432C-2 and the second finger portion 433C-2.

During this process, the first finger portion 432C-2 and the second finger portion 433C-2 may maintain their elasticity to some degree and may thus be not damaged while gripping the cable C and even when colliding with another portion.

Hereinafter, operations of the cable conveying apparatus 10 will be described.

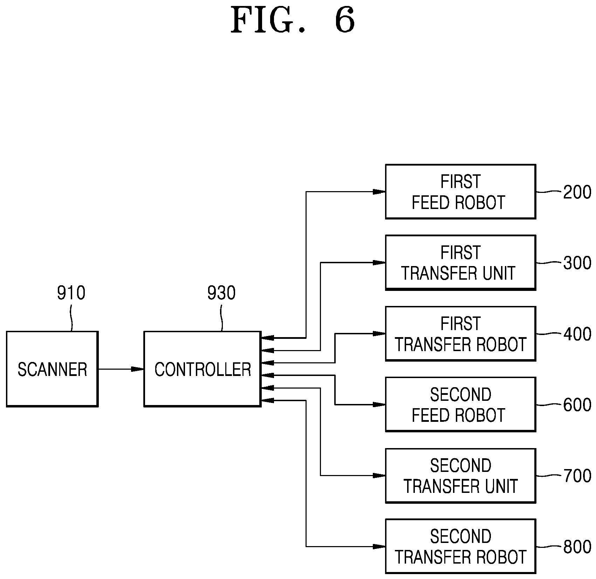

FIG. 6 is a block diagram illustrating control flows of the cable conveying apparatus 10 illustrated in FIG. 1.

Referring to FIG. 6, when the cable conveying apparatus 10 operates, a worker may load a box B (refer to FIG. 1), in which cables C (refer to FIG. 1) are contained, onto the first loading unit 100 (refer to FIG. 1). At this time, the worker may load the box B onto the first loading unit 100, either manually or using an additional loading robot.

While the box B is loaded onto the first loading unit 100, a pallet P may be loaded onto the second loading unit 500. After the box B and the pallet P are loaded as described above, the first feed robot 200 may separate a cover V from the box B and transfer the box B in which cables C are contained to the first transfer unit 300.

Then, the box B may be transferred along the first transfer unit 300 from the first feed robot 200 to the first transfer robot 400. At this time, the scanner 910 may detect RFID tags of the cables C contained in the box B and may recognize information about the cables C. The information about the cables C may include various pieces of information such as the number, amounts, types, prices, dates of manufacture, places of manufacture, manufactures, or makers of the cables C.

After recognizing the information about the cables C, the scanner 910 may transmit the information to a controller 930. To this end, the controller 930 may be connected to the scanner 910 via a wired or wireless connection for transmitting and receiving information. In addition, the controller 930 may control the operation of at least one of the first feed robot 200, the first transfer unit 300, the first transfer robot 400, the second feed robot 600, the second transfer unit 700, the second transfer robot 800, the scanner 910, and the unloading unit 920 (refer to FIG. 1). The controller 930 may be provided in various types. Examples of the controller 930 may include a personal computer, a laptop computer, a cellular phone, and a portable terminal. In this case, the controller 930 may transmit information (or data) via a wired or wireless connection with at least one of the first feed robot 200, the first transfer unit 300, the first transfer robot 400, the second feed robot 600, the second transfer unit 700, the second transfer robot 800, the scanner 910, and the unloading unit 920.

The controller 930 may select a pallet P, in which cables C will be contained, among a plurality of pallets P based on the information about the cables C transmitted from the scanner 910. For example, the controller 930 may control the second feed robot 600 to grip a pallet P loaded on one of a plurality of second loading units 500 and transfer the pallet P to the second transfer unit 700. The second feed robot 600 may move along a set path to grip a pallet P and transfer the pallet P to the second transfer unit 700.

If the second transfer unit 700 operates after the pallet P is placed on the second transfer unit 700, the pallet P may be moved along the second transfer unit 700. At this time, the controller 930 may control the second transfer unit 700 such that the pallet P may be stopped at a certain position or placed at a certain position at a given time. In addition, the controller 930 may control the first transfer robot 400 such that the first transfer robot 400 may grip a cable C contained in the box B and transfer the cable C to the pallet P. In this case, the first transfer robot 400 may grip the cable C and release the cable C by the same methods as described above, and thus descriptions thereof will not be given.

After cables C are accommodated in the pallet P as described above, the second transfer unit 700 may move the pallet P accommodating the cables C to the second transfer robot 800 from the first transfer robot 400. At this time, the controller 930 may control the second transfer robot 800 to transfer the pallet P containing the cables C from the second transfer unit 700 to the unloading unit 920. In this case, the controller 930 may suspend the operation of the second transfer unit 700 to fix the position of the pallet P. In addition, pallets P containing cables C may be distinguishably placed onto the unloading unit 920 according to information about cables C under the control of the controller 930. For example, when a plurality of unloading units 920 are provided, the controller 930 may control the second transfer robot 800 to place pallets P on an unloading unit 920 corresponding to cable information.

Therefore, the cable conveying apparatus 10 may exactly sort cables C according to the types of the cables C. In addition, the cable conveying apparatus 10 may exactly check information on cables C.

The cable conveying apparatus 10 may automatically transfer cables C. In addition, the cable conveying apparatus 10 may check information about cables C while transferring the cables C.

The cable conveying apparatus 10 may prevent cables C from being broken or damaged when the cables C are gripped. In addition, the cable conveying apparatus 10 may quickly take cables C out of boxes B.

Since the cable conveying apparatus 10 automatically transfers cables C, the process time and errors may be reduced.

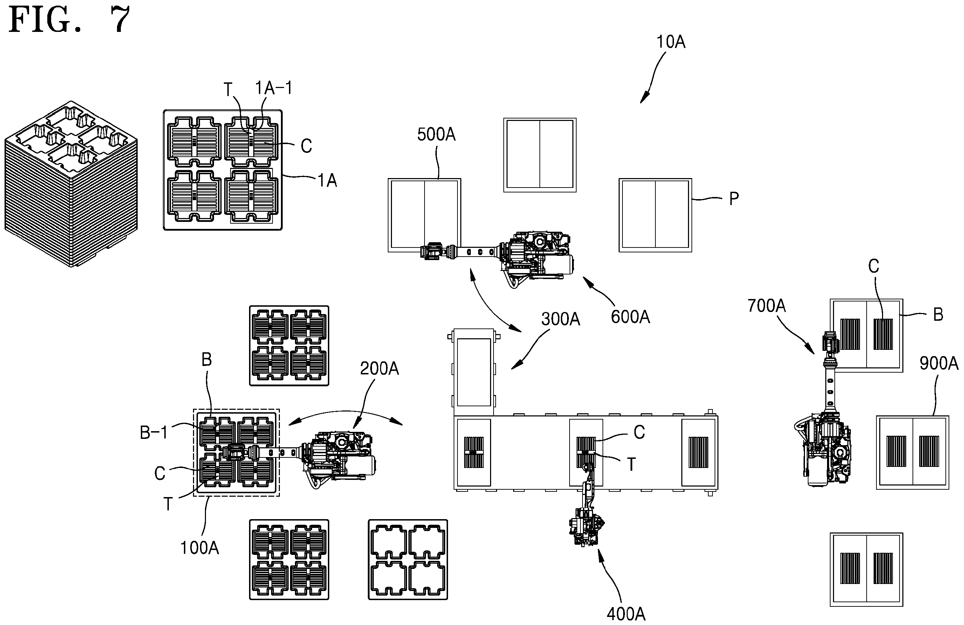

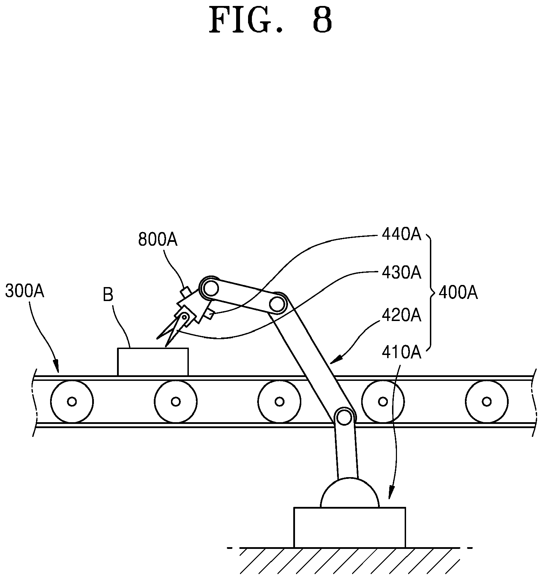

FIG. 7 is a plan view illustrating a cable conveying apparatus 10A according to another embodiment. FIG. 8 is a schematic view illustrating a cutting robot 400A illustrated in FIG. 7.

Referring to FIGS. 7 and 8, the cable conveying apparatus 10A may include a first loading unit 100A, a first transfer robot 200A, a transfer unit 300A, the cutting robot 400A, a second loading unit 500A, a feed robot 600A, a second transfer robot 700A, a scanner 800A, and an unloading unit 900A.

A container B containing cables C may be placed onto the first loading unit 100A. In this case, the first loading unit 100A may be identical or similar to the first loading unit 100 described with reference to FIG. 1. The container B may include various materials. For example, the container B may include paper. In anther embodiment, the container B may include at least one of a metal, a synthetic resin, rubber, and silicone. The container B may have recesses therein to accommodate cables C. In addition, protrusions B-1 may protrude into the recesses of the container B to prevent the cables C from moving. In this case, the protrusions B-1 may protrude at an angle with the length direction of the cables C.

The first transfer robot 200A may transfer the cables C from the container B to the transfer unit 300A. In this case, the first transfer robot 200A may be identical or similar to the first feed robot 200 or the first transfer robot 400 described with reference to FIG. 1, and thus a detailed description thereof will not be given. For ease of description, the following description will be given based on the case in which the first transfer robot 200A is identical to the first feed robot 200 described with reference to FIG. 1.

A box P may be supplied to the transfer unit 300A by the feed robot 600A. In this case, the transfer unit 300A may bend a transfer path of the box P at least once to reduce a workspace and provide a space for installing other devices. The transfer unit 300A is identical or similar to the first transfer unit 300 described with reference to FIG. 1, and thus a detailed description thereof will not be given.

The cutting robot 400A may cut ties T of cables C contained in the box P moving along the transfer unit 300A. The cutting robot 400A may include a robot support unit 410A, a robot arm 420A, a cutting unit 430A, and a vision unit 440A. The robot support unit 410A may be fixed to the ground or a building. The robot arm 420A may include a plurality of joints and may be movably connected to the robot support unit 410A. In this configuration, the robot arm 420A may make motions in various directions. The cutting unit 430A may be provided on an end of the robot arm 420A to cut ties T used for fastening cables C. In this case, the cutting unit 430A may have any type, structure, or device capable of cutting ties T, such as scissors, a human finger type device, a laser, or a torch. The vision unit 440A may be provided on at least one of the cutting unit 430A and the robot arm 420A to photograph at least one of the cables C, the ties T, and the box P. To this end, the vision unit 440A may include a camera.

Boxes P in which cables C will be contained may be placed onto the second loading unit 500A. In this case, the second loading unit 500A is identical or similar to the second loading unit 500 described with reference to FIG. 1, and thus a detailed description thereof will not be given.

The feed robot 600A may transfer one of the boxes P from the second loading unit 500A to the transfer unit 300A. In this case, the feed robot 600A is identical or similar to the second transfer robot 800 described with reference to FIG. 1, and thus a detailed description thereof will not be given.

The second transfer robot 700A may transfer the box P from the transfer unit 300A to the unloading unit 900A. To this end, the second transfer robot 700A may be placed between the transfer unit 300A and the unloading unit 900A. In addition, the second transfer robot 700A is identical or similar to the second transfer robot 800 described with reference to FIG. 1, and thus a detailed description thereof will not be given.

The scanner 800A may be provided on one of the first transfer robot 200A, the first transfer robot 400, and the transfer unit 300A which is a transfer path of boxes P. In this case, the scanner 800A may scan RFID tags or barcodes attached to ties T. To this end, the scanner 800A may include an RFID reader or barcode reader. For ease of description, the following description will be given based on the case in which the scanner 800A is provided on the cutting robot 400A and includes a barcode reader.

Boxes P containing cables C may be transferred by the second transfer robot 700A and placed onto the unloading unit 900A. In this case, the unloading unit 900A is identical or similar to the unloading unit 920 described with reference to FIG. 1, and thus a detailed description thereof will not be given.

The cable conveying apparatus 10A may operate as follows. A user may supply a container B containing cables C to the first loading unit 100A.

The first transfer robot 200A may grip a cable C contained in the container B and take the cable C out of the container B.

During this process, the feed robot 600A may transfer a box P from the second loading unit 500A to the transfer unit 300A. Then, the box P may be moved along the transfer unit 300A.

When the box P is transferred as described above, the first transfer robot 200A may transfer the cable C to the transfer unit 300A. The first transfer robot 200A may insert the cable C into the box P placed on the transfer unit 300A.

After cables C are contained in the box P in this manner, the transfer unit 300A may operate to move the box P to a position corresponding to the cutting robot 400A.

The cutting robot 400A may photograph the positions of the box P, the cables C, and ties T using the vision unit 440A. At this time, an image or picture captured by the vision unit 440A may be transmitted to a controller (not shown). Thereafter, the controller may determine the positions of ties T based on the captured image or picture and may control the robot arm 420A of the cutting robot 400A to place the cutting unit 430A at a position corresponding to the ties T.

During this process, the scanner 800A may read barcodes on the ties T. The barcodes may include information about the cables C. In this case, this cable information is identical or similar to that explained with reference to FIG. 6, and thus a detailed description thereof will not be given.

After information about the cables C is detected using the scanner 800A, the ties T may be cut using the cutting unit 430A. Thereafter, the transfer unit 300A may operate to move the box P containing the cables C. The second transfer robot 700A may transfer the box P from the transfer unit 300A to the unloading unit 900A.

This process may be continuously repeated. In this case, a plurality of additional sensors may be used to measure the positions of boxes P or the like, and the controller may control each element according to the positions of boxes P detected by the sensors.

Therefore, the cable conveying apparatus 10A may prevent cables C from being broken or damaged when the cables C are gripped. In addition, the cable conveying apparatus 10A may quickly take cables C out of containers B.

Since the cable conveying apparatus 10A automatically acquire information about cables C when the cables C are transferred, the process time and errors may be reduced.

According to the embodiments, cables may be correctly separated according to the types thereof. In addition, according to the embodiments, information about cables may be correctly checked.

According to the embodiments, cables may be automatically transferred. In addition, information about cables may be checked while the cables are transferred.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the spirit and scope of the disclosure as defined by the following claims.

## Claims

1. A cable conveying apparatus comprising:
a first feed robot configured to feed a box containing cable;
a first transfer robot configured to take the cable out of the box fed by the first feed robot and insert the cable into a pallet; and
a scanner placed in a path of one of the first feed robot, the first transfer robot, and the box, the scanner being configured to acquire information about the cable.

2. The cable conveying apparatus of claim 1, wherein the scanner comprises a radio frequency identification (RFID) reader.

3. The cable conveying apparatus of claim 1, wherein the first feed robot is configured to separate a cover from the box by pulling the cover by suction.

4. The cable conveying apparatus of claim 1, wherein the first transfer robot comprises:
a support unit fixed to the ground;
a rotation unit rotatably provided on the support unit; and
a gripper unit provided on the rotation unit and configured to grip the cable contained in the box and take the cable out of the box.

5. The cable conveying apparatus of claim 4, wherein the gripper unit comprises:
a connection portion connected to the rotation unit;
a first gripper portion connected to the connection portion in a linearly movable and rotatable manner; and
a second gripper portion facing the first gripper portion and connected to the connection portion in a linearly movable and rotatable manner.

6. The cable conveying apparatus of claim 5, wherein at least one of the first and second gripper portions comprises:
a drive portion rotatably connected to the connection portion;
a guide portion fixed to the connection portion; and
a gripping portion connected to the drive portion and inserted into the guide portion, the gripping portion being configured to linearly move and rotate along the guide portion according to an operation of the drive portion.

7. The cable conveying apparatus of claim 6, wherein the gripping portion comprises:
a movable portion inserted into the guide portion and configured to linearly move and rotate along the guide portion; and
a finger portion connected to the movable portion and configured to grip the cable.

8. The cable conveying apparatus of claim 7, wherein the finger portion comprises a cover portion configured to make contact with the cable.

9. The cable conveying apparatus of claim 8, wherein the cover portion comprises an elastic material.

10. The cable conveying apparatus of claim 8, wherein the finger portion further comprises a reinforcement support portion placed between portions of the cover portion.

11. The cable conveying apparatus of claim 1, further comprising a first transfer unit placed between the first feed robot and the first transfer robot and configured to transfer the box containing the cable.

12. The cable conveying apparatus of claim 1, further comprising a second transfer robot configured to transfer the pallet containing the cable to an outer area.

13. A cable conveying apparatus comprising:
a first transfer robot configured to feed cable contained in a container into a box;
a cutting robot configured to cut a tie of the cable fed by the first transfer robot; and
a scanner placed in a path of one of the first transfer robot, the cutting robot, and the box, the scanner being configured to acquire information about the cable which is recorded on the tie.
